# EUROPÄISCHE PATENTSCHRIFT

(11) **EP 4 277 720 B1**
(45) Veröffentlichungstag und Bekanntmachung des Hinweises auf die Patenterteilung: **07.10.2026**
(21) Anmeldenummer: 22710352.0
(22) Anmeldetag: 25.02.2022
(51) Int. Cl.: B01D 29/11, B01D 29/21

(54) **FILTERELEMENT UND FILTERVORRICHTUNG**
FILTER ELEMENT AND FILTERING DEVICE
ÉLÉMENT DE FILTRATION ET DISPOSITIF DE FILTRATION

(30) Priorität: 05.03.2021 DE 102021001192
(43) Veröffentlichungstag der Anmeldung: 22.11.2023
(73) Patentinhaber: Hydac Filtertechnik GmbH, 66280 Sulzbach/Saar (DE)
(72) Erfinder: SAKRASCHINSKY, Michael, 66386 St. Ingbert (DE); MEES, Harald, 66822 Lebach (DE)
(74) Vertreter: Bartels und Partner, Patentanwälte
(86) Internationale Anmeldenummer: PCT/EP2022/054789
(87) Internationale Veröffentlichungsnummer: WO 2022/184577

(56) Entgegenhaltungen:
- DE-A1- 2 138 412
- FR-A1- 2 175 901
- GB-A- 867 004
- GB-A- 880 812
- US-A- 3 662 895

## Beschreibung

Die Erfindung betrifft ein Filterelement mit den Merkmalen im Oberbegriff von Anspruch 1.

Durch DE 199 10 821 C2 ist ein Verfahren zum Herstellen eines Filterelementes bekannt, das insbesondere zum Einbau in ein Tankgehäuse einer Hydraulikanlage vorgesehen ist und eine rohrförmige Filtermatte als Medienbahn aufweist, die einen inneren Hohlraum für ungefilterte Flüssigkeit umschließt, der an einem bodenseitigen Ende durch eine untere Endkappe abgeschlossen ist, die mit dem angrenzenden Rand eines die Filtermatte umgebenden, äußeren Stützrohres verbunden ist, das bereichsweise mit Durchbrüchen versehen und am kopfseitigen oberen Ende mit einer oberen Endkappe verbunden ist, die eine Durchflussöffnung für zu filternde Flüssigkeit aufweist, wobei das Verfahren die Schritte beinhaltet:
a) Umbördeln des bodenseitigen Randes des Stützrohres nach innen,
b) Einlegen der unteren Endkappe mit einer einen zentralen, erhöhten Bodenteil umgebenden, randseitig vertieften Ringfläche in den umbördelten bodenseitigen Rand des Stützrohres,
c) Einfüllen eines Klebstoffes in den durch die randseitige Ringfläche der unteren Endkappe definierten Klebebadbereich,
d) Einschieben der Filtermatte in das Stützrohr zur Bildung einer Klebung an der unteren Endkappe,
e) Vorsehen einer solchen oberen Endkappe, deren zentrale Durchflussöffnung von einer vertieften randseitigen Ringfläche umgeben ist, die einen oberen Klebebadbereich definiert und sich am Stützrohr radial über dessen kopfseitigen Rand hinaus nach außen erstreckt, an dem eine flanschartige, radiale Erweiterung ausgebildet wird, die eine Haltefläche zur Abstützung des Filterelementes am Rand einer Öffnung des Tankgehäuses bildet,
f) Befüllen des Klebebadbereiches der oberen Endkappe mit Klebstoff und
g) Einsetzen des kopfseitigen Endes der vom Stützrohr umgebenen Filtermatte in den Klebebadbereich der oberen Endkappe zur Bildung einer kopfseitigen Klebung.

Bei der bekannten Lösung ist keine Vorfertigung einer inneren Filtereinheit erforderlich, so dass das innere Stützrohr in Wegfall geraten kann. Jedoch benötigt das bekannte Verfahren das Herstellen von Klebstoffverbindungen zwischen den Endkappen und dem dazwischenliegenden Filtermedium in Form der plissierten Medienbahn, was herstelltechnisch gesehen einen erhöhten Aufwand mit sich bringt.

Durch WO 2011/060949 A2 ist ein Verfahren zur Bildung einer zur Filtration von Fluiden geeigneten Filtermatte aus mindestens einem Bahnabschnitt einer Mattenbahn bekannt, wobei mindestens eine die Lagen mindestens eines Bahnabschnittes der Mattenbahn miteinander versiegelnde Schweißbahn gebildet wird und wobei anschließend mindestens ein Schnitt entlang der mindestens einen Schweißbahn derart durchgeführt wird, dass der mindestens eine Bahnabschnitt unter Bildung mindestens eines versiegelten Randbereichs durchschnitten wird. Bei dieser bekannten Lösung verbleibt der Teil der Schweißbahn an den bzw. den Seitenrändern der Mattenbahn und bildet somit eine Randversiegelung aus, durch die die Enden sämtlicher Lagen durch den das Kunststoffmaterial der Lagen aufschmelzenden Schweißvorgang versiegelt sind. Dergestalt ist eine ungewollte Auffädelung oder eine Fasermigration an den Rändern der fluiddurchlässigen Medienbahn verhindert.

Die US 3 662 895 A beschreibt ein Filterelement mit den Merkmalen im Oberbegriff von Anspruch 1 mit einem Filtermedium mit einem fluiddurchlässigen Stützrohr, das von einer plissierten Medienbahn eines Filtermediums umfasst ist, wobei die Medienbahn an mindestens einem ihrer Endbereiche ein streifenförmiges Dichtmittel aufweist, das in die Medienbahn mit eingefaltet ist und das als eigenständiges Bauteil zumindest teilweise mit der Medienbahn fest verbunden ist.

Weitere Filterelemente gehen aus der GB 880 812 A, der DE 21 38 412 A1, der FR 2 175 901 A1, der US 3 662 895 A, der EP 2 501 454 B1 und der DE 101 24 612 A1 hervor.

Ausgehend von diesem Stand der Technik liegt der Erfindung die Aufgabe zugrunde, ein Filterelement zu schaffen, das sich in einfacher und kostengünstiger Weise herstellen lässt. Der Erfindung liegt ferner die Aufgabe zugrunde, eine Filtervorrichtung zur Verfügung zu stellen, die diese Aufgabenstellung gleichfalls erfüllt.

Die dahingehenden Aufgaben lösen ein Filterelement mit den Merkmalen des Patentanspruches 1 sowie eine Filtervorrichtung mit den Merkmalen des Patentanspruches 7.

Gemäß dem Kennzeichen von Anspruch 1 ist vorgesehen, dass das Stützrohr mindestens eine nach außen vorspringende Dichtwulst aufweist, die in das benachbart angeordnete Dichtmittel unter Verpressung dieses Dichtmittels eingreift.

Ein Verfahren zur Bildung eines Filtermediums ist mit zumindest den folgenden Verfahrensschritten durchzuführen:
- Aufbringen mindestens eines eigenständigen Dichtmittels in einer vorgebbaren Richtung auf eine fluiddurchlässige Medienbahn,
- Herstellen eines festen Verbundes zumindest zwischen Teilen des Dichtmittels und der Medienbahn,
- Plissieren des Verbundes unter Bildung einzelner Filterfalten,
- Erzeugen eines Hohlkörpers, indem die beiden einander benachbart gegenüberliegenden, quer zur vorgebbaren Richtung verlaufenden Seitenränder der Medienbahn miteinander verbunden werden, so dass für das
- Erhalten mindestens eines Abdichtbereiches an der Medienbahn, das jeweilige Dichtmittel auf der Innenseite des Hohlkörpers angeordnet eine Abdichtung für die jeweilige Filterfalte und eine stirnseitige Abdichtung der Medienbahn erreicht wird, wobei als Dichtmittel ein Auftragmedium streifenförmig entlang mindestens eines Längsrandes der Medienbahn auf diese aufgebracht wird, das ausgehärtet den jeweiligen Abdichtbereich bildet.

Dergestalt lässt sich in kostengünstiger und herstelltechnisch einfacher Weise ein Filterelement erhalten, mit dem eine sichere Abdichtung einer Unfiltratseite von einer Filtratseite des Filterelementes erreicht ist. Das Verfahren erlaubt das Erstellen eines Filterelementes ohne die üblichen Endkappen und ohne den Einsatz von Klebstoffverbindungen, um die Endkappen mit der fluiddurchlässigen Medienbahn unter Bildung eines Filterelementes als Ganzes zu verbinden.

Ein Filterelement weist dabei in bekannter Weise ein fluiddurchlässiges Stützrohr auf, das von einer plissierten Medienbahn des Filtermediums umfasst ist, wobei die Medienbahn an mindestens einem ihrer Endbereiche ein streifenförmiges Dichtmittel aufweist, das in die Medienbahn mit eingefaltet ist und das als eigenständiges Bauteil zumindest teilweise mit der Medienbahn fest verbunden ist. Durch das Einfalten eines streifenförmigen Dichtmittels in die Medienbahn kann auf Klebstoffverbindungen als bekanntes Dichtmittel verzichtet werden.

Eine Filtervorrichtung dient der Aufnahme eines solchen Filterelementes, wobei die Vorrichtung mit einem Filterkopf versehen ist, der einen Zulauf für Unfiltrat und einen Ablauf für Filtrat aufweist, wobei an dem über eine Verrohrung stationär festgelegten Filterkopf ein zugehöriger Filtertopf mit dem Filterelement sich abnehmen, insbesondere abschrauben, lässt. Dadurch, dass das Filterelement mittels eines Festlegestutzens seines Stützrohres lösbar oder fest mit dem Ablauf im Filterkopf verbunden ist, lässt sich das Filterelement in einfach tauschbarer Weise zusammen mit seinem Stützrohr aus der Vorrichtung entnehmen oder es wird bei verbleibendem Stützrohr am Filterkopf nur das zu tauschende Filtermedium mit seinen jeweiligen klebstofffrei angebrachten Dichtmitteln entfernt. Insbesondere die letztgenannte Lösung lässt sich auf besonders umweltfreundliche Weise umsetzen.

Weitere vorteilhafte Ausgestaltungen des erfindungsgemäßen Filterelementes sowie der zugehörigen Filtervorrichtung sind Gegenstand der Unteransprüche.

Im Folgenden wird die erfindungsgemäße Lösung anhand von verschiedenen Ausführungsbeispielen nach der Zeichnung näher erläutert. Dabei zeigen in prinzipieller und nicht maßstäblicher Darstellung die
- Fig. 1 bis 3: in der Art eines Ablaufplanes die wesentlichen Herstellschritte;
- Fig. 4 und 5: einmal in Draufsicht, einmal in Ansicht längs der Schnittlinie X-X in Fig. 4 einen Teilausschnitt der plissierten Filtermattenbahn mit eingefaltetem Dichtmittel;
- Fig. 6 und 7 sowie 11 bis 15: in der Art einer Längsschnittdarstellung verschiedene Ausführungsbeispiele von Filterelementen;
- Fig. 8, 9, 16 und 17: verschiedene Ausgestaltungen von Filtervorrichtungen; und
- Fig. 10: in der Art einer Längsschnittdarstellung ein Ausführungsbeispiel eines Filtermediums als Hohlkörper.

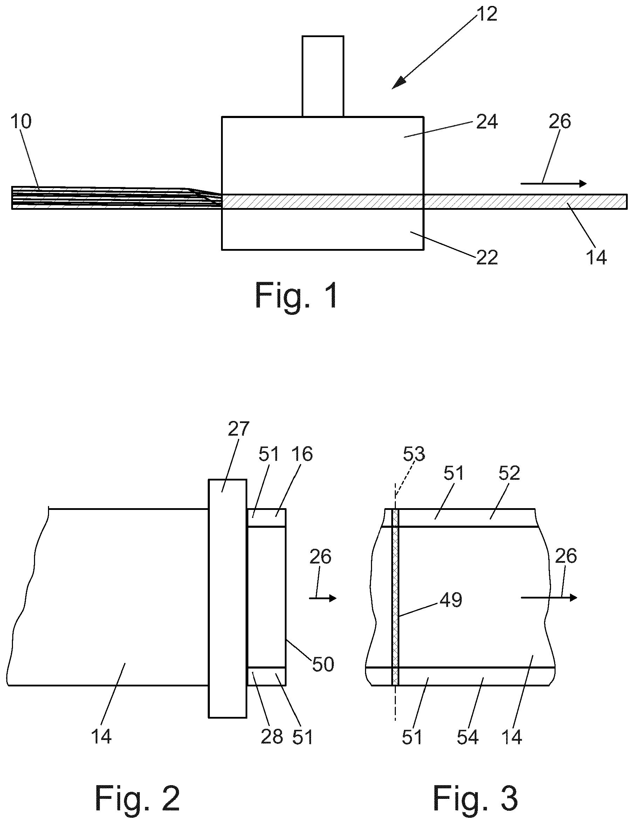

Die Fig. 1 bis 5 dienen lediglich der Erläuterung des Hintergrundes der Erfindung und sind nicht Gegenstand eines Anspruchs.

In Blickrichtung auf die Fig. 1 gesehen, werden linksseitig einzelne übereinander angeordnete Medienlagen 10 einer als Ganzes mit 12 bezeichneten Schweißeinrichtung zugeführt. Der mehrlagige Aufbau einer solchen Filtermatte oder Medienbahn 14 für ein Filterelement 15 eines Filterelementes 17 kann beispielsweise von der einen Seite zu der anderen Seite hin folgenden Schichtaufbau aufweisen:
1. Metalldrahtgewebe, Kunststoffgewebe oder Kunststoffgitter mit Netzstruktur,
2. Polyestervlies,
3. Glasfasermatte oder Melt-Blown-Vlies,
4. Glasfasermatte, Melt-Blown-Vlies, Papiervlies oder Polyestervlies,
5. Edelstahlpolyester-Mischgewebe oder ein Kunststoff-Mischgewebe, und
6. Metalldrahtgewebe, Kunststoffgewebe oder Kunststoffgitter mit Netzstruktur.

Andere Lagenzusammensetzungen sind hier ohne Weiteres möglich und der Lagenaufbau bestimmt sich danach, welche Anforderungen später an ein fertiges Filterelement zur Abreinigung partikulärer Verschmutzungen gestellt werden, insbesondere können mehr oder weniger Lagen unter Weglassen von inneren und äußeren Stützgeweben vorgesehen sein.

Die Schweißeinrichtung 12 ist als Ultraschallschweißeinrichtung ausgebildet mit einem Amboss 22 und einer auf- und abbewegbaren Sonotrode 24. Es sind Ausführungsformen denkbar, bei denen die Sonotrode 24 stationär angeordnet ist und der Amboss 22 sich in Blickrichtung auf die Fig. 1 gesehen vertikal auf- und abbewegt. Die vorgebbare Richtung zum Bewegen der fluiddurchlässigen Medienbahn 14 ist in den Fig. 1 bis 3 mit einem Pfeil 26 wiedergegeben.

Verlässt die Medienbahn 14 die Schweißeinrichtung 12 nach der Fig. 1, wird sie einem stationär angeordneten Sprühbalken 27 zugeführt, der entlang von zwei einander gegenüberliegenden Längsrändern 51 auf die Medienbahn 14 ein Auftragmedium streifenförmig aufsprüht, in dem in Pfeilrichtung 26 die Medienbahn 14 von nicht näher dargestellten Transportmitteln unter dem Sprühbalken 27 hindurchgeführt wird. Es lässt sich aber auch der Sprühbalken 27 verfahren. Das derart aufgebrachte Auftragmedium härtet anschließend aus, wobei hierfür eine nicht näher dargestellte Wärmequelle zum Einsatz kommen kann, wie beispielsweise UV-Licht. Auch ist ein vollständiges Aushärten nicht zwingend notwendig; vielmehr kann für den sich anschließenden Falt- oder Plissiervorgang eine Teilaushärtung respektive der Beginn des Aushärtens genügen. Dergestalt bildet jedenfalls das streifenförmig aufgebrachte Auftragmedium eine Art Dichtraupe, auf jeweils einer der beiden gegenüberliegenden Bahnseiten der Medienbahn 14, aus.

Anstelle eines Sprühauftrages kann das Auftragmedium auch im Rahmen eines 3D-Druckverfahrens auf die Medienbahn 14 aufgebracht werden. In jedem Fall bildet nach Aushärten des Dichtmittels 16, 28 der jeweilige Streifen den Abdichtbereich 52, 54 für das Filtermedium 15 aus.

In einem nächsten Arbeitsschritt nach der Fig. 3 kann auf die gezeigte Oberseite der Medienbahn 14 quer zu deren Längsausrichtung eine Querschweißnaht 49 eingebracht sein, die mittig entlang einer querverlaufenden Trennlinie 53 durchtrennt einen glatten Seitenrand 50 gemäß der Darstellung nach der Fig. 2 ausbildet. Insbesondere erlaubt die Querschweißnaht 49 vor dem Durchtrennen, dass das Fasermaterial der einzelnen Medienlagen 10 vor dem Auftrennen entlang der Trennlinie 53 mit eingeschweißt wird und es somit nicht ungewollt zu einem Auffädeln mit Faseraustrag kommt, der ansonsten als Partikelverunreinigung in den Fluidstrom auch auf die Filtratseite des Filterelementes 17 gelangen könnte.

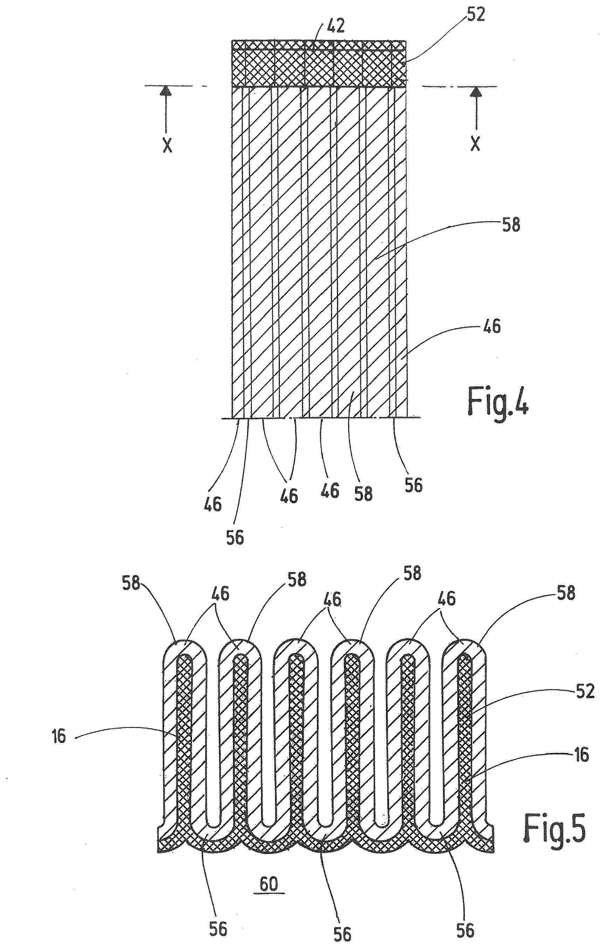

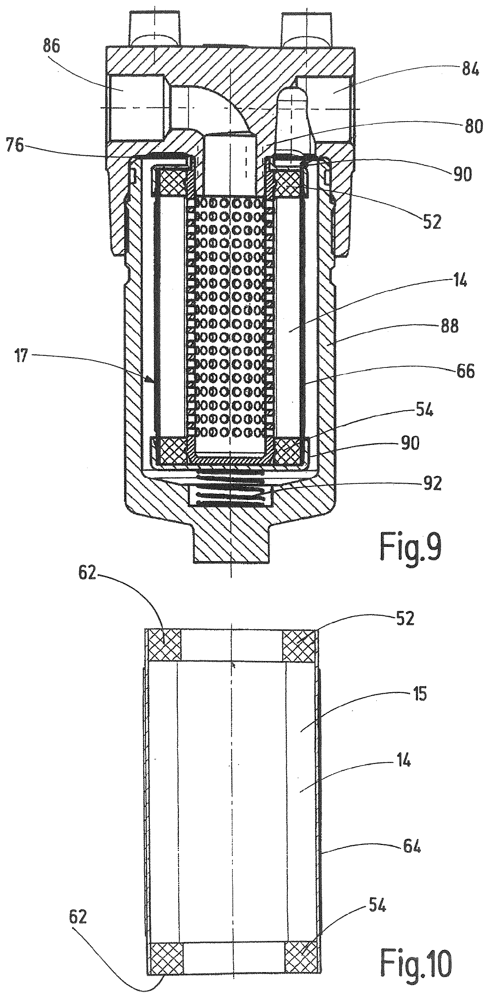

Mit Durchtrennen der Medienbahn entlang der jeweiligen Trennlinie 53 entstehen dergestalt Medienbahnen 14 vorgebbarer Länge, die in Richtung des Pfeiles 26 in weiterer Transportrichtung einer Plissieranlage (nicht dargestellt) zugeführt werden, wie dies beispielhaft in WO 2011/060949 A2 aufgezeigt ist. Dergestalt entstehen in einem weiteren Fertigungsschritt einzelne Filterfalten 46 gemäß der Darstellung nach der Fig. 5. Die derart plissierte Medienbahn 14 wird dann zum zylindrischen Hohlkörper aufgestellt, wie er beispielhaft in der Fig. 10 wiedergegeben ist, wobei die beiden einander benachbarten Seitenränder 50 miteinander verbunden werden, beispielsweise unter Einsatz einer Schweiß- oder Clipnaht.

Wie sich insbesondere aus der Fig. 4 ergibt, ist zumindest an einer Endseite der Medienbahn 14 ein Abdichtbereich 52 erhalten, wobei gemäß der Darstellung nach der Fig. 10 nicht nur auf einer Seite der Medienbahn 14 ein Abdichtbereich 52 vorhanden ist, sondern vielmehr befindet sich bevorzugt ein weiterer Abdichtbereich 54 auch auf der gegenüberliegenden Seite der Matten- oder Medienbahn 14, der gleich zum Abdichtbereich 52 ausgestaltet ist. Das mittels des Sprühbalkens 27 jeweils randseitig aufgesprühte Auftragmedium ist dabei aus einem Elastomer gebildet. Als einschlägiges Elastomermaterial kann dabei ein Polyurethanschaum eingesetzt werden, wobei der erhaltene Schaum für eine verbesserte Abdichtwirkung vorzugsweise geschlossenzellig ausgebildet ist. Demgemäß finden eher Hartschäume oder halbharte Schaumstoffe Verwendung vor offenporigen Weichschaumstoffen. Je nach Anwendungsfall kann der Sprüh- oder Sprayauftrag auch mehrschichtig sein unter Einsatz unterschiedlicher Elastomermaterialien.

Ferner können als Auftragmedium auch thermoplastische Polyurethane sowie thermoplastische Elastomere eingesetzt werden einschließlich Silikon. Bei Eignung lassen sich die Elastomere auch im 3D-Druckverfahren applizieren.

Wie sich aus der Fig. 5 des Weiteren ergibt, erstrecken sich die einzelnen Filterfalten 46 mit gleicher Faltenhöhe zwischen einem Faltental 56 und einem Faltenberg 58. Jede einzelne Filterfalte 46 bildet einen Abstand zwischen einer aufsteigenden und einer absteigenden Faltenseite aus, wobei der Abstand vollflächig von dem aufgetragenen und insoweit eingefalteten Dichtmittel 16, 28 ausgefüllt ist. Das dahingehende streifenförmige Dichtmittel 16, 28 ist darüber hinaus entlang des bogenförmigen Faltentalverlaufes auf der Innenseite 60 der diesbezüglichen Faltentäler 56 geführt. Wie bereits dargelegt, ist im Hinblick auf den Aufsprühvorgang das jeweilige Dichtmittel 16, 28 fest mit dem Faltenverlauf der Filterfalten 46 verbunden und bildet eine Art Dichtraupe aus.

Das insoweit hergestellte hohlzylindrische Filtermedium 15 ist in der Fig. 10 dargestellt, das stirnseitig die beiden Abdichtbereiche 52 und 54 aufweist. Die Medianbahn 14 des Filtermediums 15 ist außenumfangsseitig von einem folienartigen, fluiddurchlässigen Umfassungsmantel 64 umfasst. Ein solcher Umfassungsmantel ist beispielhaft in der DE 10 2010 011 722 A1 offenbart, wobei die die Außenhülle als Umfassungsmantel 64 bildende Folie aus einer Polyamid- oder Polyethylenverbindung bestehen kann. Weitere Folienmaterialien sind Polyester oder Epoxyd-Polyurethan. Insgesamt kann der Umfassungsmantel 64 aus einem ähnlichen Kunststoff wie vorstehend erwähnt mit guten Heißklebeeigenschaften gebildet sein und die bahnartige Folie lässt sich unter Bilden des hohlzylindrischen Umfassungsmantels 64 entlang ihrer einander gegenüberliegenden Seitenränder durch ein Ultraschallschweißverfahren oder mittels eines Schweißlasers verbinden. Die Folie ist für einen Fluiddurchlass entsprechend perforiert und der hohlzylindrische Umfassungsmantel 64 kann als eigenständiges Bauteil von außen her auf die hohlkörperartige Medienbahn 14 aufgeschoben werden. Da die Filterfalten 46 entsprechend nachgiebig sind, ist ein dahingehender Aufschiebevorgang ohne Weiteres möglich und die Filterfalten 46 werden in ihrer Position durch den Umfassungsmantel 64 gehalten, was die Abdichtwirkung zu den Rändern der plissierten Medienbahn 14 verbessert.

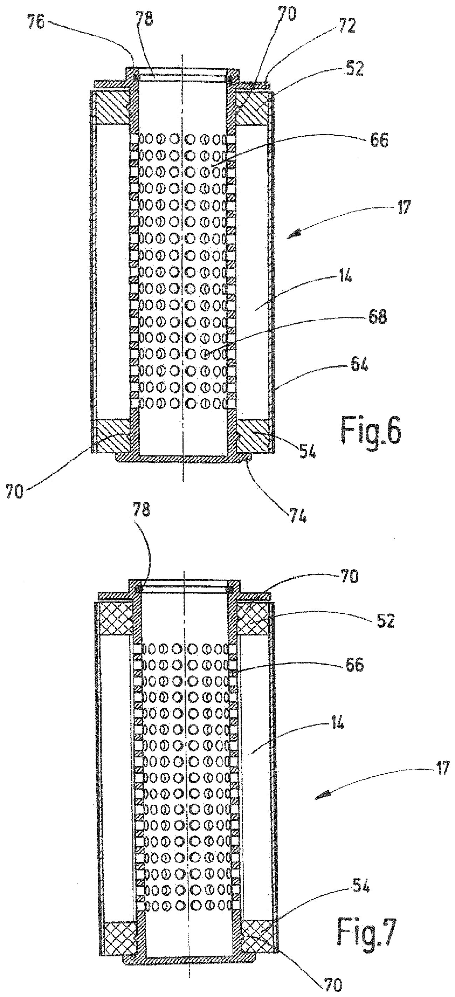

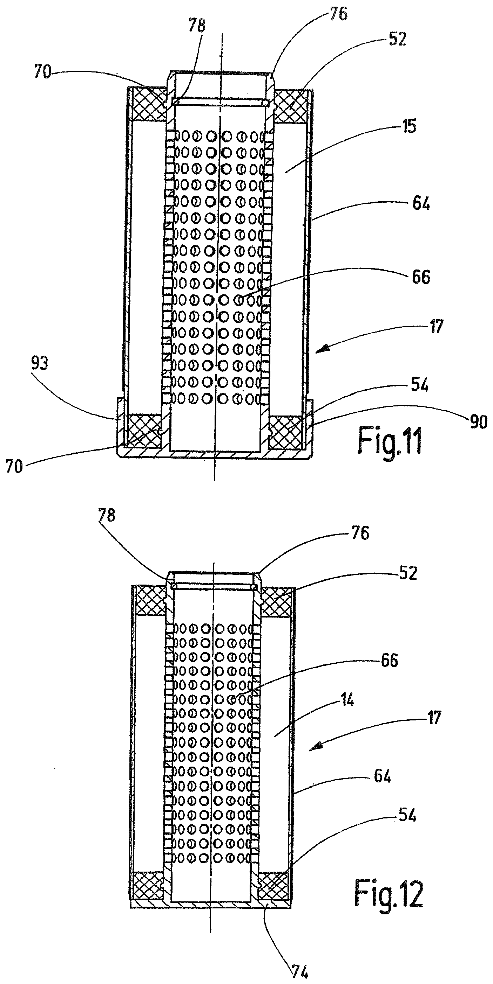

Eine andere Herstellmöglichkeit besteht darin, den folienartigen Umfassungsmantel 64 um die Medienbahn 14 herumzulegen und dann die sich überlappenden Seitenrandbereiche der Folie miteinander zu verschweißen zwecks Erhalt des insoweit geschlossenen Umfassungsmantels 64. Wie die Fig. 9, 10, 13 und 15 zeigen, kann der Umfassungsmantel 64 die beiden Bereiche 52, 54 frei lassen; es besteht aber auch die Möglichkeit nach den Fig. 6 bis 8 sowie 12, 14, 16 und 17, den Umfassungsmantel 64 in axialer Richtung gesehen derart zu verlängern, dass die Abdichtbereiche 52, 54 außenumfangsseitig noch mit umgriffen sind, so dass sich insoweit das eingefaltete Dichtmittel 16, 28 außenumfangsseitig an den dahingehenden Teilen des Umfassungsmantels 64 mit abstützen kann. Bei einer Ausführungsform gemäß der Darstellung nach der Fig. 11 umfasst der Umfassungsmantel 64 in Blickrichtung auf die Fig. 11 gesehen nur den oberen Abdichtbereich 52 unter Freilassen des unteren Abdichtbereiches 54.

Bei allen vorstehend beschriebenen Herstellarten ist insoweit das Filtermedium 15 klebstoffrei hergestellt, was eine besonders kostengünstige Realisierung ermöglicht, insbesondere wenn keine zusätzlichen Endkappen benötigt werden und durch Vermeiden von Klebstoffverbindungen ist das Filtermedium 15, insbesondere was das Entsorgen anbelangt, umweltfreundlich realisiert. Das Filtermedium 15 lässt sich nun, wie dies beispielhaft in der Fig. 6 wiedergegeben ist zum Komplett-Filterelement 17 weiter ausbauen. Insoweit weist das Filterelement 17 innenumfangsseitig ein hohlzylindrisches Stützrohr 66 auf, das im Bereich der Medienbahn 14 mit einer Vielzahl von Fluiddurchlässen in der Art einer Perforation 68 versehen ist. Die plissierte Medienbahn 14 liegt dabei mit ihren einzelnen Faltentälern 56 an der Außenumfangsseite des hohlzylindrischen Stützrohres 66 an.

Im Bereich der beiden Dichtbereiche 52, 54 ist das Stützrohr 66 mit einer geschlossen ausgebildeten Umfassungswand versehen, entlang der in mittiger Anordnung ein ringförmiger Dichtwulst 70 vorspringt, der jeweils einstückiger Bestandteil des Stützrohres 66 ist und der mit einer vorgebbaren Vorspannung in den jeweiligen Abdichtbereich 52, 54 eingreift, um die Dichtkraftwirkung für den jeweiligen Abdichtbereich 52, 54 zu erhöhen. Der jeweilige Dichtwulst 70 ist im Querschnitt gesehen schalenförmig, insbesondere halbkugelförmig, ausgebildet mit einem Radius zwischen 0,3 mm bis 1,0 mm, vorzugsweise mit einem Radius zwischen 0,5 mm und 0,9 mm, besonders bevorzugt mit einem Radius von 0,8 mm. Der Dichtwulst 17 komprimiert die Faltenrücken und mithin die Faltentäler 56 derart, dass an der Filtermatte respektive der Medienbahn 14 ein umlaufender ebener Bereich entsteht, der vollflächig am Dichtwulst 70 anliegt und die Medienbahn 14 gegenüber dem Stützrohr 66 mit seiner geschlossen ausgebildeten Umfangswand in diesem Bereich abdichtet. Gute Abdichtergebnisse haben sich auch ergeben, wenn, wie dies beispielhaft in der Fig. 7 dargestellt ist, der Dichtwulst im Querschnitt gesehen einen dreieckförmigen Verlauf hat. Insoweit unterscheidet sich die Ausführungsform nach der Fig. 7 von der ansonsten gleich ausgebildeten Ausführungsform eines Filterelementes 17 nach der Fig. 6.

Wie sich des Weiteren aus den Fig. 6 und 7 ergibt, weist das Stützrohr 66 an seinen beiden einander gegenüberliegenden Enden eine ringartige Verbreiterung 72, 74 auf, die zumindest teilweise das jeweils benachbart angeordnete Dichtmittel 16 bzw. 28 übergreift. Dabei weist in Blickrichtung auf die Fig. 6 und 7 gesehen die obere, ringartige Verbreiterung 72 einen größeren Durchmesser auf als die untere Verbreiterung 74. Des Weiteren sitzt der weitere untere Abdichtbereich 54 auf der ringartigen Verbreiterung 74 auf, wohingegen ein axialer Spaltabstand zwischen der Oberseite des Abdichtbereiches 52 und der Unterseite der ringartigen Verbreiterung 72 besteht, der zum einen verdeutlicht, dass die jeweilige Verbreiterung 72, 74 nicht zur Abdichtung des Filtermediums 15 benötigt wird und der eine gewisse Längenanpassung zwischen der Geometrie des Stützrohres 66 und dem hohlkörperartigen Filtermedium 15 als Toleranzausgleich erlaubt. Da bei der Ausführungsform nach den Fig. 6 und 7 das Stützrohr 66 als einstückiger, geschlossener Körper ausgebildet ist, ist die Medienbahn 14 um den Außenumfang des Stützrohres 66 herumzulegen mit anschließendem Verbinden der beiden einander zugewandten Seitenränder 50, beispielsweise mittels eines Ultraschallschweißverfahrens. Anschließend kann der Umfassungsmantel 64, wie bereits ausgeführt, von außen auf die plissierte Medienbahn 14 aufgeschoben werden oder er wird als Bahnabschnitt gleichfalls um die hohlzylindrische Medienbahn 14 herumgelegt und entlang den freien Seiten- oder Längsrändern zum Hohlrohr verschweißt.

Des Weiteren weist das Stützrohr 66 an seinem oberen freien Ende einen über die obere Verbreiterung 72 vorspringenden rohrförmigen Festlegestutzen 76 auf, der innenumfangsseitig eine ringförmige Aufnahmenut ausbildet für die Aufnahme eines Festlegeringes 78 in der Art eines O-Dichtringes aus Elastomermaterial.

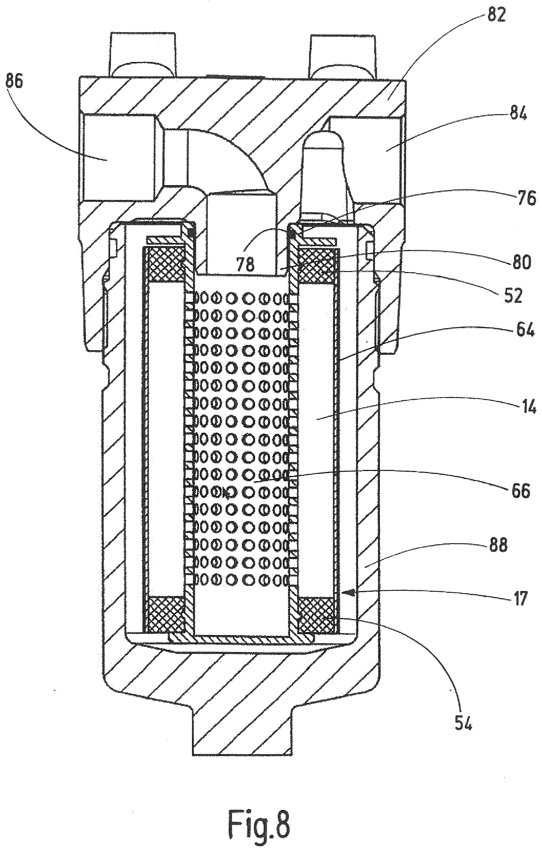

Wie insbesondere die Fig. 8 zeigt, lässt sich das Filterelement 17 nach der Fig. 6 mit seinem Festlegestutzen 76 mittels des Festlegeringes 78 auf einen korrespondierenden Anschlussstutzen 80 aufschieben, der Bestandteil eines Filterkopfes 82 ist, der über eine nicht näher dargestellte Verrohrung an dieser stationär angeordnet ist. Insoweit weist der Filterkopf 82 einen Zulauf 84 für Unfiltrat und einen Ablauf 86 für Filtrat auf. Das Filterelement 17 ist also auf den Anschlussstutzen 80 des Filterkopfes 82 als Filtratablauf aufgeschoben und mittels des Festlegeringes 78 ist eine Abdichtung zwischen der Unfiltratseite und der Filtratseite der Filtervorrichtung hergestellt. Auf den Filterkopf 82 ist von unten her ein Filtertopf 88 eingeschraubt, in dem das austauschbare Filterelement 17 als Ganzes aufgenommen ist. Filterelement 17 und Filtertopf 88 lassen sich in Hintereinanderabfolge am Filterkopf 82 festlegen; bei entsprechender Auslegung besteht aber auch die Möglichkeit, den Filtertopf 88 zusammen mit dem Filterelement 17 am Filterkopf 82 anzubringen. Der vom Zulauf 84 stammende Unfiltratstrom durchströmt im Vorrichtungsgehäuse das Filterelement 17 von außen nach innen und etwaige Partikelverschmutzung verbleibt im Filterwerkstoff der Medienbahn 14.

Bei der Vorrichtungslösung nach der Fig. 9 ist die Lösung gegenüber der Fig. 8 insoweit geändert als nunmehr der Festlegestutzen 76 ohne weiteren elastomeren Festlegering 78 am Anschlussstutzen 80 des Filterkopfes 82 von außen aufgepresst und damit mit dem Anschlussstutzen 80 fest verbunden ist. Des Weiteren verfügt das Filterelement 17 über zwei Endkappen 90, die zwischen sich die plissierte Medienbahn 14 mit den beiden Abdichtbereichen 52, 54 aufnehmen. Die obere Endkappe 90 ist auf das freie Ende des Festlegestutzens 76 und mithin auf das Stützrohr 66 mit aufgepresst und die untere Endkappe 90 stützt sich an einer Druckfeder 92 ab, die sich in der gezeigten Betriebsstellung nach der Fig. 9 mit ihrem unteren Ende wiederum an einem Gehäuseboden des Filtertopfes 88 abstützt. Mittels der Druckfeder 92 wird die Filtermatte oder Medienbahn 14 durch die beiden Endkappen 90 gespannt und insoweit werden die Medienbahnenden mit den beiden Dichtstoff- oder Abdichtbereichen 52, 54 von den Kappen 90 komprimiert und gegen den jeweiligen ringförmigen Dichtwulst 70 am Stützrohr 66 gedrückt. Durch die Lösung nach der Fig. 9 ist eine sogenannte Coreless-Variante realisiert, bei der die Außenhülse in Form des Umfassungsmantels 64 axial vor den Abdichtbereichen 52, 54 am Ende der Filtermatte oder Medienbahn 14 endet. Obwohl insoweit bei der Lösung nach Fig. 9 also kein Festlegering 78 zum Einsatz kommt, ist über die gezeigte Konstruktion eine sichere Abdichtung zwischen Unfiltrat- und Filtratbereich innerhalb der Filtervorrichtung hergestellt.

Da bei der Lösung nach der Fig. 9 das Stützrohr 66 mit der oberen Endkappe 90 fester Bestandteil des Filterkopfes 82 ist, wird für einen Austauschvorgang das Element in Form des Filtermediums 15 über das Stützrohr 66 von unten her aufgeschoben, bis das obere Ende in Form des Abdichtbereiches 52 an der Unterseite der oberen Endkappe 90 des Stützrohres 66 anliegt und von dieser Endkappe 90 radial vorgespannt wird. Dann wird die untere Endkappe 90 auf das Filtermedium 15 mit dem unteren Abdichtbereich 54 so lange aufgeschoben bis die untere Endkappe 90 am bodenseitig geschlossenen Stützrohr 66 zur Anlage kommt. Hierbei wird das untere Ende des Elementes in Form des Abdichtbereiches 54 von der unteren Endkappe 90 radial vorgespannt. Abschließend wird der Filtertopf 88 als Filtergehäuseteil mit der Druckfeder 92 in den Filterkopf 82 eingeschraubt und die Druckfeder 92 verhindert dabei ein ungewolltes Herunterrutschen der unteren Endkappe 90 und Lösen des beschriebenen Elementverbundes.

Bei der Ausführungsform nach der Fig. 11 wird ein einteiliges Stützrohr 66 eingesetzt und insoweit ist die untere Endkappe 90 nunmehr Bestandteil des dahingehenden Stützrohres 66. Das Filtermedium 15 mit den beiden Abdichtbereichen 52, 54 wird in Blickrichtung auf die Fig. 11 gesehen, oben mittels der Hülse in Form des Umfassungsmantels 64 gespannt und unten mit der Kappe 90 als einteiligem Bestandteil des Stützrohres 66. Dabei umfasst die untere Endkappe 90 mit ihrem zylindrischen Umfassungsrand 93 mit randseitigem Überstand nach oben hin den unteren Abdichtbereich 54 der Medienbahn 14. Daran angrenzend beginnt der Umfassungsmantel 64, der unter Umfassen des oberen Abdichtbereiches 52 in einer gemeinsam verlaufenden Horizontalebene endet, über die der ringartige Festlegestutzen 76 vorsteht. Insoweit ist mit der Lösung nach der Fig. 11 ein klebstofffreies, funktionsfähiges Filterelement 17 geschaffen.

Bei der Ausführungsform nach der Fig. 12 weist das Stützrohr 66 bodenseitig die ringartige Verbreiterung 74 auf, die nunmehr sich in radialer Richtung unter Ersatz der unteren Endkappe 90 über die gesamte Unterseite des unteren Abdichtbereiches 54 erstreckt. Bei der dahingehenden Ausführungsform wird dann die plissierte Medienbahn 14 mit den Abdichtbereichen 52, 54 nach außen hin nur mittels des hohlzylindrischen Umfassungsmantels 64 gespannt. Insoweit erstreckt sich der folienartig, perforierte Umfassungsmantel 66 unter Freilassen des Außenumfangsrandes der unteren Verbreiterung 74 außenumfangsseitig unter Anlage mit der Medienbahn 14 über beide randseitigen Abdichtbereiche 52, 54 hinweg. Weiter ist anders als bei der Ausführungsform nach der Fig. 11 der Festlegering 78 nicht in der Höhe des oberen Dichtwulstes 70 angeordnet, sondern liegt vielmehr in der Horizontalebene des freien Endes des oberen Abdichtbereiches 52 mit dem oberen stirnseitigen Ende des Umfassungsmantels 64.

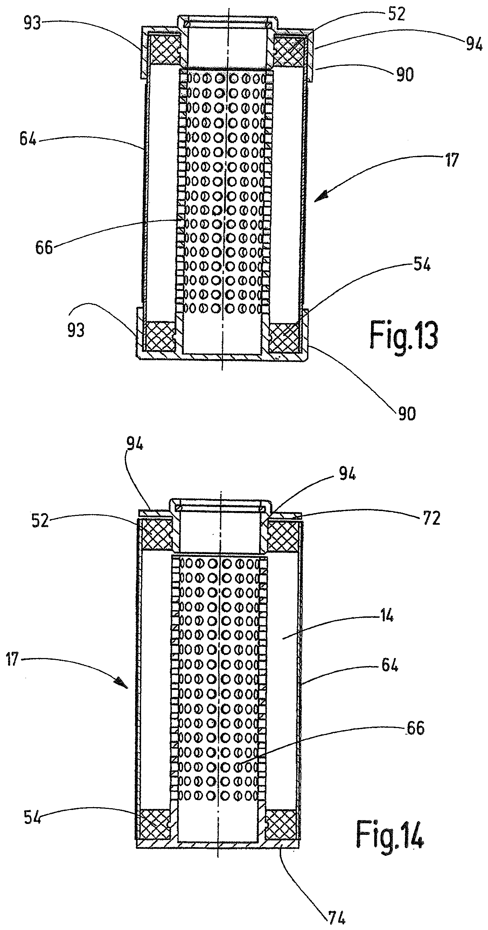

Bei den Ausführungsformen nach den Fig. 13 und 14 ist das Stützrohr 66 in seinem oberen Endbereich geteilt und weist nunmehr einen separaten Kappenabschnitt 94 auf. Die Medienbahn 14 mit ihrem jeweiligen Abdichtbereich 52, 54 wird dabei zwischen der oberen Endkappe 90 des Kappenabschnittes 94 und der unteren Endkappe 90 gespannt, wobei hier vorzugsweise wiederum eine Druckfeder 92 innerhalb einer Gehäusevorrichtung, vergleichbar der Lösung nach der Fig. 9, das Aufbringen der Anpresskraft für den Kappenverbund übernehmen kann. Ansonsten ist die obere Endkappe 90 wie auch die untere Endkappe 90 vergleichbar der Lösung nach der Fig. 11 ausgebildet.

Der obere Kappenabschnitt 94 weist insoweit die obere Endkappe 90 auf, die mit einem zylindrischen Umfassungsrand 93 den oberen Abdichtbereich 52 umfangsseitig umschließt. Ferner weist der Kappenabschnitt 94 den bereits vorgestellten Festlegestutzen 76 mit innenumfangsseitig angeordnetem Festlegering 78 auf. Des Weiteren verpresst der zugehörige Dichtwulst 70 als Teil des Kappenabschnittes 94 den oberen Abdichtbereich 52 gegenüber dem flankenartig nach unten vorspringenden Umfassungsrand 93, der insoweit gebildeten oberen Endkappe 90. Bei der Ausführungsform nach der Fig. 13 ist im Übrigen die untere Endkappe 90 vergleichbar zu der oberen Endkappe 90 ausgebildet und steht mit einem vorgebbaren axialen Überstand über die Endseite des Abdichtbereiches 54 vor. Der Umfassungsmantel 64 verläuft dabei in einem Medienbahnabschnitt zwischen den beiden gegenüberliegenden Endkappen 90.

Bei der Ausführungsform nach der Fig. 14 weist der obere Kappenabschnitt 94 die ringartige Verbreiterung 72 auf und ebenso ist das Stützrohr 66 an seinem unteren Ende mit der ringartigen Verbreiterung 74 versehen, vergleichbar der Lösung nach der Fig. 12.

Bei den Ausführungsformen nach den Fig. 11 bis 14 lässt sich insbesondere die Medienbahn 14 mit ihren beiden Abdichtbereichen 52, 54 auf das Stützrohr 66 durch Aufschieben montieren und anschließend kann eine obere Endkappe 90 oder der Kappenabschnitt 94 nachträglich gleichfalls durch Aufschieben angebracht werden.

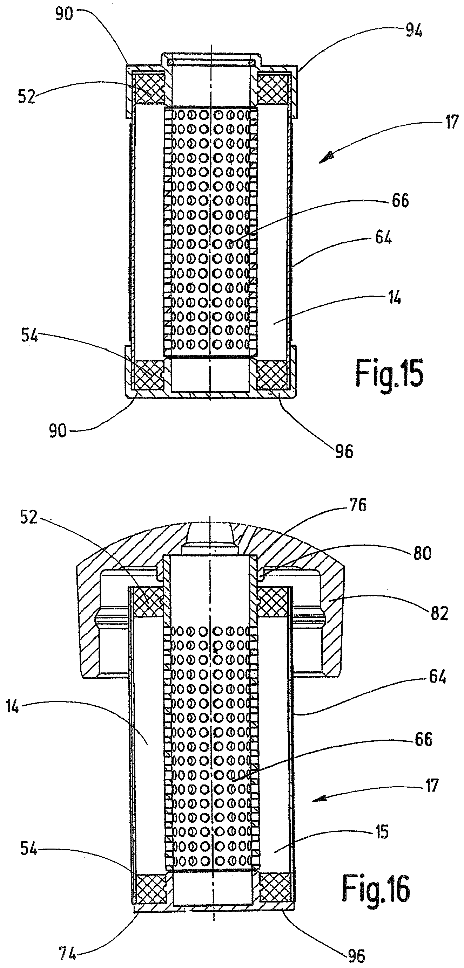

Bei der Ausführungsform nach der Fig. 15 ist vergleichbar der Ausbildung mit dem oberen Kappenabschnitt 94 nunmehr auch ein separater unterer Kappenabschnitt 96 vorgesehen. Dies erhöht die Modularität für den Aufbau eines Filterelementes 17, in dem weitgehend einzelne Abschnitte desselben frei zusammengesetzt werden können. Dergestalt lässt sich beispielsweise ein Stützrohr 66 unterschiedlicher axialer Baulänge mit Medienbahnen 14 vergleichbarer Längenausprägung zwanglos miteinander verbinden und die Kappenabschnitte 94, 96 lassen sich nachträglich zur Komplementierung des Gesamt-Filterelementes 17 einsetzen. Bei den Ausführungsformen nach den Fig. 11 bis 15 dient wiederum der Festlegestutzen 76 mit integriertem Festlegering 78 dazu, das jeweilige Filterelement 17, vergleichbar der Darstellung nach der Fig. 8, auf den Anschlussstutzen 80 des Filterkopfes 82 für einen Festlegevorgang in wiedertrennbarer Weise für einen Austauschvorgang gegen ein Neuelement 17 aufzuschieben.

Bei der teilweise dargestellten Gehäuse-Ausführungsform nach der Fig. 16 wird ein Filterelement 17 mit rohrförmigem Festlegestutzen 76 innenseitig in den Anschlussstutzen 80 des Filterkopfes 82 eingepresst, so dass das Stützrohr 66 stationär am Filterkopf 82 verbleibt. Ein unterer Kappenabschnitt 96, der getrennt vom sonstigen Stützrohr 66 ausgebildet ist, kann dann zusammen mit dem Umfassungsmantel 64, der plissierten Medienbahn 14 sowie den beiden Abdichtbereichen 52, 54 für einen Tauschvorgang vom verbleibenden Stützrohr 66 abgezogen werden. Hierfür umgreift der Umfassungsmantel 64 mit seiner axialen Baulänge sowohl außenumfangsseitig den oberen Abdichtbereich 52 als auch den unteren 54. Die Elastizität für die Abdichtbereiche 52, 54 ist derart gewählt, dass trotz dem jeweiligen Dichtwulst 70 ein Abziehen des Filtermediums 15 als Ganzes möglich ist. Sofern das Filtermedium 15 wegen zunehmender Partikelverunreinigung verschmutzt ist, kann das insoweit verbrauchte Medium gegen ein neues Medium 15 getauscht werden und das Einschieben des Neuelementes geht so lange vonstatten, bis der obere Ringrand des unteren Ringkappenabschnittes 96 in Anlage kommt mit der unteren freien Stirnseite des Stützrohres 66.

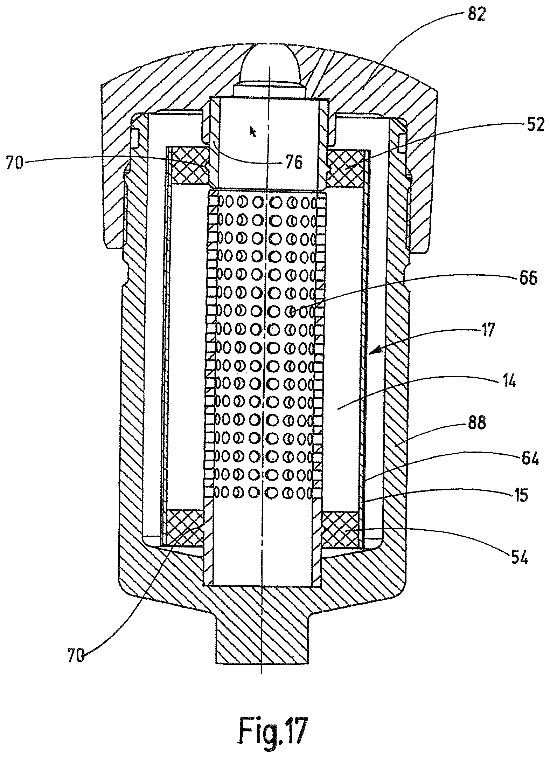

Bei der Ausführungsform nach der Fig. 17 ist in besonders einfacher Ausgestaltung eines Coreless-Adapters weder ein Kappenabschnitt 94 noch ein Kappenabschnitt 96 oder eine sonstige Endkappe 90 und auch keinerlei ringartige Verbreiterung 72, 74 vonnöten, sondern vielmehr genügt hier eine Lösung vergleichbar der Ausgestaltung nach der Fig. 10; jedoch mit der Maßgabe, dass hier wiederum der Umfassungsmantel 64 beide Abdichtbereiche 52, 54 mit umfasst. Insoweit stützt sich der Umfassungsmantel 64 mit dem unteren Abdichtbereich 54 auf der Innenseite des Filtertopfes 88 ab. Des Weiteren ist das Stützrohr 66 von dem oberen im Filterkopf 82 verbleibenden Festlegestutzen 76 durch Abziehen abnehmbar. Insoweit ist eine erhöhte Modularität im Sinne eines Baukastensystems für die Vergleichslösung nach der Fig. 17 geschaffen. Auch im dahingehenden Fall wird die Medienbahn 14 durch die Hülse in Form des Umfassungsmantels 64 gespannt. Ist das untere Ende des Stützrohres 66 in verstärktem Maße in den Boden des Gehäuse- oder Filtertopfes 88 eingepresst gegenüber der oberen Festlegestelle im Filterkopf 82 mittels des Festlegestutzens 76, lässt sich insoweit auch das gesamte Filterelement 17 vom Filterkopf 82 für einen Austauschvorgang gegen ein Neuelement 17 abziehen und derart entfernen. Weitere Ausgestaltungen eines diesbezüglichen Elementaufbaus sind möglich.

## Patentansprüche

1. Filterelement mit einem Filtermedium mit einem fluiddurchlässigen Stützrohr (66), das von einer plissierten Medienbahn (14) eines Filtermediums (15) umfasst ist, wobei die Medienbahn (14) an mindestens einem ihrer Endbereiche (52, 54) ein streifenförmiges Dichtmittel (16, 28) aufweist, das in die Medienbahn (14) mit eingefaltet ist und das als eigenständiges Bauteil (16, 28) zumindest teilweise mit der Medienbahn (14) fest verbunden ist,
**dadurch gekennzeichnet,**
**dass** das Stützrohr (66) mindestens eine nach außen vorspringende Dichtwulst (70) aufweist, die in das benachbart angeordnete Dichtmittel (16, 28) unter Verpressung dieses Dichtmittels (16, 28) eingreift.

2. Filterelement nach Anspruch 1, **dadurch gekennzeichnet, dass** das Stützrohr (66) im Bereich der Anlage mit dem jeweiligen Dichtmittel (16, 28) fluidundurchlässig ausgebildet ist.

3. Filterelement nach Anspruch 1 oder 2, **dadurch gekennzeichnet, dass** die Medienbahn (14) von einem folienartigen fluiddurchlässigen Umfassungsmantel (64) umfasst ist, der sich zumindest zwischen zwei gegenüberliegenden Dichtmitteln (16, 28) erstreckt.

4. Filterelement nach einem der Ansprüche 1 bis 3, **dadurch gekennzeichnet, dass** das Stützrohr (66) zumindest an einem seiner Enden eine ringartige Verbreiterung (72, 74) aufweist, die zumindest teilweise das jeweils benachbart angeordnete Dichtmittel (16, 28) übergreift.

5. Filterelement nach einem der Ansprüche 1 bis 4, **dadurch gekennzeichnet, dass** das Stützrohr (66) an einem seiner freien Enden an einem Festlegestutzen (76) innenseitig einen Festlegering (78), vorzugsweise in der Art eines O-Dichtringes, aufweist oder in diesem Bereich als Einpressteil konzipiert ist.

6. Filterelement nach einem der Ansprüche 1 bis 5, **dadurch gekennzeichnet, dass** die Medienbahn (14) sich zumindest an einer Endkappe (90) abstützt, die eigenständig oder einstückiger Bestandteil des Stützrohres (66) ist.

7. Filtervorrichtung, in der ein Filterelement nach einem der Ansprüche 1 bis 6 aufgenommen ist, mit einem Filterkopf (82), der einen Zulauf (84) für Unfiltrat und einen Ablauf (86) für Filtrat aufweist und einem daran lösbar angeordneten Filtertopf (88), der das Filterelement (17) aufnimmt, **dadurch gekennzeichnet, dass** das Filterelement (17) mittels des Festlegestutzens (76) seines Stützrohres (66) lösbar oder fest mit dem Ablauf (86) im Filterkopf (82) verbunden ist.

## Claims

1. Filter element having a filter medium with a fluid-permeable supporting tube (66), which is surrounded by a pleated media web (14) of a filter medium (15), said media web (14) having, on at least one of its end regions (52, 54), a strip-shaped sealant (16, 28) which is also folded into the media web (14) and which, as a self-contained component (16, 28), is at least in part firmly connected to the media web (14),
**characterised in that**
the supporting tube (66) has at least one outwardly protruding sealing bead (70) which engages in the adjacently arranged sealant (16, 28) while compacting said sealant (16, 28).

2. Filter element according to claim 1, **characterised in that** the supporting tube (66) is configured to be fluid-impermeable in the region of contact with the respective sealant (16, 28).

3. Filter element according to either claim 1 or claim 2, **characterised in that** the media web (14) is enclosed by a film-like fluid-permeable surrounding casing (64) which extends at least between two opposite sealants (16, 28).

4. Filter element according to any of claims 1 to 3, **characterised in that** the supporting tube (66) has a ring-like broadening (72, 74) at least on one of its ends which at least partially overlaps the adjacently arranged sealant (16, 28) in each case.

5. Filter element according to any of claims 1 to 4, **characterised in that** the supporting tube (66) has, on one of its free ends on a locator fitting (76), a locator ring (78) on the inside thereof, preferably in the manner of an O-ring, or is designed in this region as a press-fit part.

6. Filter element according to any of claims 1 to 5, **characterised in that** the media web (14) is supported at least on one end cap (90), which is self-contained or an integral part of the supporting tube (66).

7. Filter device in which a filter element according to any of claims 1 to 6 is received, comprising a filter head (82) that has an inlet (84) for unfiltered medium and an outlet (86) for filtrate, and a filter bowl (88) releasably arranged thereon which receives the filter element (17), **characterised in that** the filter element (17) is connected releasably or firmly to the outlet (86) in the filter head (82) by means of the locator fitting (76) of its supporting tube (66).

## Revendications

1. Elément de filtration comprenant un milieu filtrant ayant un tube (66) d'appui perméable aux fluides, qui est entouré d'une bande (14) plissée d'un milieu (15) filtrant, dans lequel la bande (14) a, sur au moins l'une de ses parties (52, 54) d'extrémité, un moyen (16, 28) d'étanchéité en forme de bande, qui est introduit par pliage dans la bande (14) et qui est relié fixement comme pièce (16, 28) indépendante au moins en partie à la bande (14),
**caractérisé**
**en ce que** le tube (66) d'appui a au moins un bourrelet (70) d'étanchéité, qui fait saillie vers l'extérieur et qui pénètre dans le moyen (16, 28) d'étanchéité disposé au voisinage avec compression de ce moyen (16, 28) d'étanchéité.

2. Elément de filtration suivant la revendication 1, **caractérisé en ce que** le tube (66) d'appui est imperméable aux fluides dans la partie de l'application aux moyens (16, 28) respectifs d'étanchéité.

3. Elément de filtration suivant la revendication 1 ou 2, **caractérisé en ce que** la bande (14) est enserrée par une enveloppe (64) de type feuille perméable aux fluides, qui s'étend au moins entre deux moyens (16, 28) d'étanchéité opposés.

4. Elément de filtration suivant l'une des revendications 1 à 3, **caractérisé en ce que** le tube (66) d'appui **a,** au moins sur l'une de ses extrémités, un élargissement (72, 74) de type annulaire, qui empiète au moins en partie sur le moyen (16, 28) respectif d'étanchéité disposé au voisinage.

5. Elément de filtration suivant l'une des revendications 1 à 4, **caractérisé en ce que** le tube (66) d'appui a, sur l'une de ses extrémités libres sur un appui (76) fixe du côté intérieur, une bague (78) de fixation, de préférence à la manière d'un joint torique ou est conçu dans cette partie comme partie à presser.

6. Elément de filtration suivant l'une des revendications 1 à 5, **caractérisé en ce que** la bande (14) s'appuie au moins sur une coiffe (90) d'extrémité, qui est autonome ou qui est une partie constitutive d'une pièce avec le tube (66) d'appui.

7. Installation de filtration, dans laquelle est reçu un élément de filtration suivant l'une des revendications 1 à 6, comprenant une tête (82) de filtre, qui a une arrivée (84) pour du non filtrat et une sortie (86) pour du filtrat et un pot (88) de filtre, qui y est disposé de manière amovible et qui reçoit l'élément (17) de filtration, **caractérisée en ce que** l'élément (17) de filtration est, au moyen de la tubulure (76) de fixation de son tube (66) de filtration, relié de manière amovible ou fixe à la sortie (86) dans la tête (82) du filtre.
